# EUROPÄISCHE PATENTSCHRIFT

(11) **EP 2 242 640 B1**
(45) Veröffentlichungstag und Bekanntmachung des Hinweises auf die Patenterteilung: **06.11.2019**
(21) Anmeldenummer: 09708697.9
(22) Anmeldetag: 15.01.2009
(51) Int. Cl.: B29C 73/16, C09K 3/10, C08L 7/02, C08C 1/04

(54) **DICHTMITTEL, INSBESONDERE FÜR GUMMIARTIKEL**
SEALANT, IN PARTICULAR FOR RUBBER ARTICLES
PRODUIT D'ÉTANCHÉITÉ, NOTAMMENT POUR ARTICLES EN CAOUTCHOUC

(30) Priorität: 07.02.2008 DE 102008007992
(43) Veröffentlichungstag der Anmeldung: 27.10.2010
(73) Patentinhaber: Continental Reifen Deutschland GmbH, 30165 Hannover (DE)
(72) Erfinder: SCHUNACK, Michael, 30161 Hannover (DE); RECKER, Carla, 30167 Hannover (DE); CONDE, Mario, F-77780 Bourron-Marlotte (FR)
(74) Vertreter: Finger, Karsten
(86) Internationale Anmeldenummer: PCT/EP2009/050417
(87) Internationale Veröffentlichungsnummer: WO 2009/098114

(56) Entgegenhaltungen:
- EP-A- 0 846 552
- EP-A- 0 988 960
- EP-A- 1 234 836

## Beschreibung

Die Erfindung betrifft ein Verfahren zur Herstellung eines Dichtmittels und die Verwendung eines Dichtmittels zum Abdichten der Beschädigungsstelle eines Gummiartikels, insbesondere eines Gummihohlartikels, wie z.B. eines Fahrzeugluftreifens, das nach seinem Einbringen in den Gummiartikel durch Drehen an der Innenwandung verteilt wird, wobei das Dichtmittel in und/oder an die Beschädigungsstelle dringt und diese verschließt.

Insbesondere für Fahrzeugluftreifen gilt dass sie beim Überfahren von spitzen Gegenständen Schäden in Form von Rissen oder Löchern erleiden, die zum Luftdruckverlust im Reifen führen. Um solche Schäden zumindest provisorisch, d. h. für eine gewisse Zeitdauer, möglichst sicher abzudichten bis der Fahrzeugluftreifen ausgetauscht werden kann, sind Dichtmittel bekannt, die nach dem Herausschrauben des Ventileinsatzes oder direkt über das Ventil in den Reifen z. B. mit Hilfe einer Vorrichtung mit Druckquelle und Dichtmittel eingebracht werden.

Solche Dichtmittel sind aus dem Stand der Technik weitreichend bekannt und folgende Druckschriften sind hier beispielhaft zu würdigen:
(D1) EP 0 988 960 B1
(D2) DE 197 53 630 B4
(D3) EP 1 382 654 B1
(D4) EP 0 846 552 B1
(D5) EP 0 584 597 B1
(D6) EP 1234836 A1

Dichtmittel, die auf Kautschuklatex basieren, werden in D1, D2 und D3 offenbart. In diesen Druckschriften wird nicht-deproteinierter Naturkautschuklatex verwendet und das Dichtmittel optional mit Dispergier- und Emulgiermitteln versetzt. Die Dispergier- bzw. Emulgiermittel können in dem Dichtmittel, welches auf nicht-deproteiniertem Naturkautschuklatex basiert, ihre volle Wirkung nicht entfalten, so dass eine Verbesserung der Temperaturstabilität bei erhöhten Temperaturen und eine Verbesserung der Koagulationsneigung nur bedingt möglich sind. Des Weiteren besteht ein erhöhtes Allergenitätspotential durch die im Naturkautschuklatex enthaltenen Proteine.

Deproteinierte, Naturkautschuklatex basierte, Dichtmittel sind aus D4 und D5 bekannt. Auch hier ist das Dichtmittel optional mit Dispergier- bzw. Emulgiermitteln versetzt. Die Verwendung von Naturkautschuklatex, der bereits vorher deproteiniert wurde, verbessert die Temperaturstabilität bei erhöhten Temperaturen und die Koagulationsneigung bei gleichzeitig verringertem Allergenitätspotential. Der deproteinierte Naturkautschuklatex wird dabei, ausgehend von nicht-deproteiniertem Naturkautschuklatex, in einem separaten, aufwändigen und mehrstufigen Verfahren hergestellt. Bei diesem Verfahren ist es aber nicht möglich, die Proteine in dem Naturkautschuklatex vollständig zu entfernen, so dass das allergene Potential zwar verringert, aber nicht verhindert werden kann.

Die D6 offenbart deproteinierten Naturkautschuklatex, aus dem durch Eintauchen geeigneter Formen ein Film zur Herstellung von z.B. Gummihandschuhen produziert wird. Anschließend wird durch Vulkanisation das gewünschte Produkt formstabil erhalten. Dabei bestimmen die eingesetzten Tenside und die Konzentration der Ca²⁺-Ionen die Eigenschaften dieses Latex. Zur Charakterisierung des Naturkautschuklatex werden u.a. die Zugfestigkeit (Tensile strength) und die Reißdehnung (Elongation at break) herangezogen. Der Naturkautschuklatex enthält keine Abbauprodukte einer Deproteinierungsreaktion (Anspruch 1 der D6: ,,...protein decomposition and removal treatment...").

Es ist auch bekannt, für Mittel zum provisorischen Abdichten von aufblasbaren oder aufpumpbaren Gegenständen synthetische Latices zu verwenden. Es hat sich allerdings herausgestellt, dass derartige Mittel in der Regel eine schlechtere Dichtwirkung zeigen als solche auf der Basis von Naturkautschuklatex.

Offenbart ist ein Dichtmittel zum Abdichten der Beschädigungsstelle eines Gummiartikels bereitzustellen, das sich durch eine weitere Verbesserung der Temperaturstabilität, insbesondere bei erhöhten Temperaturen, extrem verringertem bis faktisch nicht mehr nachweisbarem Allergenitätspotential und vereinfachter Herstellung auszeichnet.

Offenbart ist ein Dichtmittel der oben genannten Art durch folgende Zusammensetzung gekennzeichnet ist:
- 30 - 90 Gew. -% zumindest einer Naturkautschuklatex-Dispersion;
- 0,1 - 10 Gew. -% zumindest eines ionischen und / oder nicht-ionischen Emulgier- und / oder Dispergiermittels;
- 0,0001 - 10 Gew. -% zumindest einer Protease;
- 5 - 40 Gew. -% zumindest einer wässrigen Klebharzdispersion;
- 1 - 50 Gew. -% zumindest eines Gefrierschutzmittels;
- 0,01 - 12 Gew. -% Abbauprodukte einer Deproteinierungsreaktion;
- 0 - 30 Gew. -% weitere Zusatzstoffe.

Die in dieser Schrift verwendeten Angaben in Gew. -% beziehen sich immer auf die Gesamtmenge an Dichtmittel.

Durch obige Zusammensetzung des Dichtmittels werden eine Verbesserung hinsichtlich der Stabilität bei höheren Temperaturen und ein extrem verringertes Allergenitätspotential erreicht. Des Weiteren ist die Herstellung des vorstehend offenbarten Dichtmittels vergleichsweise einfach und somit im produktionstechnischem Maßstab kostengünstiger.

Das Dichtmittel enthält 30 - 90 Gew. -%, bevorzugt 30 - 80 Gew. -% und besonders bevorzugt 30 - 70 Gew. -%, einer Naturkautschuklatex-Dispersion. Die Naturkautschuklatex-Dispersion ist nicht-deproteiniert. Es können alle in der Natur vorkommenden Kautschuklatices verwendet werden, z. B. der Naturkautschuklatex aus der tropischen Kautschukpflanze *Hevea brasiliensis* oder aber auch Guayule-Latex, der aus dem Guayulestrauch (*Parthenium argentatum*) nach Rodung, Trocknung, und Zerkleinerung der Zweige durch Flotation gewonnen wird

Weiterhin enthält das Dichtmittel 0,1 - 10 Gew. -%, bevorzugt 0,5 - 5 Gew. -%, eines ionischen und / oder nicht-ionischen Emulgier- und / oder Dispergiermittels.

Handelt es sich hierbei um ein ionisches, insbesondere um ein anionisches Tensid, so findet vor allem ein Carbonsäure-Tensid und / oder ein Sulfonsäure-Tensid und / oder ein Sulfat-Tensid und / oder ein Phsophat-Tensid Verwendung.

Handelt es sich hierbei um ein nicht-ionisches Tensid, so findet vor allem ein Polyoxyalkylenether-Tensid und / oder ein mehrwertiges Alkohol-Fettsäureester-Tensid und / oder ein Zuckerfettsäureester-Tensid und / oder ein Alkylolyglycosid-Tensid und / oder ein Polyoxyalkyl-mehrwertiger Alkohol-Ether-Tensid Verwendung.

Mischungen aus ionischen und nicht-ionischen Tensiden sind möglich.

Dem Dichtmittel werden weiterhin 0,0001 - 10 Gew. -%, bevorzugt 0,001 - 10 Gew. -%, besonders bevorzugt 0,01 - 10 Gew. -%, wiederum besonders bevorzugt 0,1 - 10 Gew. -% einer Protease hinzugefügt. Besonders zweckmäßig ist hier der Mengenbereich von 0,1 - 8 Gew. -%, insbesondere wiederum von 0,1 - 5 Gew. -%. Vorteilhafterweise ist die Protease hierbei ausgewählt aus der Gruppe, bestehend aus Alkalase und / oder Esperase und / oder Savinase und / oder Liquanase, wobei die Verwendung von Alkalase bevorzugt wird.

Die Protease dient dazu, die im Naturkautschuklatex vorkommenden, natürlichen Proteine abzubauen. Das Vorkommen dieser Proteine und deren Abbaureaktion sind in der Literatur hinreichend bekannt. Neben der D5 sei an dieser Stelle auch auf GB 2098222A, US 2097481 A und beispielhaft auch auf das Handbuch der Kautschuktechnologie, Hoffmann & Gupta, Dr. Gupta Verlag, 2001, Kapitel 2, verwiesen.

Das Dichtmittel enthält ferner 0,01 - 12 Gew. -%, bevorzugt 0,1 - 12 Gew. -%, Abbauprodukte einer obig erwähnten Deproteinierungsreaktion. Bei diesen Abbauprodukten handelt es sich um Aminosäuren und / oder deren Oligomere, die aus dennatürlichen Proteinen des Naturkautschuklatex und / oder der Protease stammen. Der Nachweis dieser Abbauprodukte erfolgt indirekt, indem das Verschwinden des Proteinbandes elektrophoretisch, z.B. mittels SDS-PDAGE (engl. Abkürzung für Natriumdodecylsulfat-Polyacrylamidgelelektrophorese), verfolgt wird. Beispielhaft sei hierzu auf D. J. Siler & K. Cornish, Analytical Biochemistry 229 (1995), S. 278 - 281, und H. Schägger & G. von Jagow, Analytical Biochemistry 166 (1987), S. 368 - 379, verwiesen.

Zumindest ein Klebharz ist im Abdichtmittel enthalten, es können auch mehrere Klebharze im Gemisch verwendet werden, wobei die Harze als wässrige Klebharzdispersion in Mengen von 5 - 40 Gew. -%, bevorzugt in Mengen von 5 - 30 Gew. -%, insbesondere bevorzugt in Mengen von 10 - 30 Gew. -%, eingesetzt werden. Als Basis der Klebharzdispersion können natürliche oder synthetische Harze, wie Kohlenwasserstoffharze, eingesetzt werden, die als Klebrigmacher wirken. Bevorzugt ist die Klebharzdispersion auf der Basis von Kolophoniumharzen und deren Estern und /oder Terpen-Phenol-Harzen und / oder Alkin-Phenol-Harzen und / oder Cumaron-Inden-Harzen. Dichtmittel mit einer solchen Klebharzdispersion zeigen eine besonders hohe Klebfestigkeit mit guter Abdichtwirkung und haben einen positiven Einfluss auf die Kompatibilisierung mit anderen Komponenten des Dichtmittels. Besonders positiv ist es, wenn die Klebharzdispersion auf der Basis von Kolophoniumharzester ist.

Terpen-Phenol-Harze sind solche Harze, die durch Säure-katalysierte Addition von Phenolen an Terpene hergestellt werden.

Als Alkin-Phenol-Harz können Harze verwendet werden, die als Alkin z. B. Ethin und als Phenolkomponente z. B. Butylphenol oder Novolacke aus Formaldehyd und z. B. p-tert. Butylphenol (oder p-Diisobutylphenol) enthalten.

Cumaron-Inden-Harze fallen als Copolymere bei der Polymerisation der im Leichtöl des Steinkohlenteers enthaltenen ungesättigten Verbindungen an.

Das Kolophonium, das aus dem Baumharz verschiedener Nadelhölzer gewonnen werden kann, besteht im Wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, dass aus dem Kolophonium gewisse Bestandteile, wie z. B. die Abietinsäure, Dehydroabietinsäure, Tetrahydroabietinsäure, Dihydroabietinsäure, deren Isomere und/oder Mischungen hieraus, gewonnen werden und diese Bestandteile einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet.

Das Abdichtmittel enthält für eine Verwendbarkeit auch bei tiefen Temperaturen, z. B. für einen Einsatz in der kalten Jahreszeit oder in polaren Regionen, 1 - 50 Gew. -%, bevorzugt 1 - 40 Gew. -%, zumindest eines Gefrierschutzmittels. Gefrierschutzmittel, auch Frostschutzmittel genannt, sind Substanzen, die zur Senkung des Gefrierpunktes Verwendung finden.

Das Gefrierschutzmittel ist hierbei ausgewählt aus der Gruppe, bestehend aus Ethylenglykol und / oder Di-Ethylenglykol und / oder Tri-Ethylenglykol und / oder Di-Ethylenglykol-Monomethylether und / oder Propylenglykol und / oder Propylenglykol-Monomethylether und / oder Di-Propylenglykol-Monomethylether, Di-Propylenglykol und / oder Propylenglykol-Monopropylether und / oder Ethanol und / oder Isopropanol. Bevorzugt ist allerdings wenn es sich bei dem Gefrierschutzmittel um Ethylenglykol und / oder Di-Ethylenglykol und / oder Tri-ethylenglykol und / oder Propylenglykolhandelt, wobei das Ethylenglykol besonders bevorzugt ist.

Das Dichtmittel enthält 0 - 30 Gew. -%, bevorzugt 0 - 20 Gew. -%, insbesondere wenigstens 0,01 Gew. -%, insbesondere wiederum wenigstens 0,05 Gew. -%, weitere Zusatzstoffe. Die besonders zweckmäßige Mindestmenge beträgt hier 0,1 Gew. -%, insbesondere wiederum 0,2 Gew. -%. So können dem Dichtmittel Alterungsschutz- bzw. Konservierungsmittel zur Sicherung der Einsatzbereitschaft des Dichtmittels bei Lagerung zugesetzt werden. Ferner kann das Dichtmittel Schaumstabilisatoren und pH-Regulatoren enthalten.

Es ist auch möglich, dem Dichtmittel Füllstoffe zuzusetzen, die zum Abdichten insbesondere von größeren Löchern beitragen. Als Füllstoffe können z. B. faserige Materialien (Natur- oder Synthesefasern), Kieselsäure, Talk, Kreide, Ruß, Gummimehl, Metalloxide, weitere Carbonate oder Silikate oder Ähnliches eingesetzt werden.

Des Weiteren wird ein Verfahren zur Herstellung eines Dichtmittels mit obiger Zusammensetzung bereitgestellt. Die einzelnen Komponenten gemäß Kennzeichen des Anspruchs 1 werden hierbei in einer zeitlich definierten Reihenfolge in einem Mischgefäß zusammengeführt.

Zuerst wird eine Naturkautschuklatex-Dispersion und zumindest ein ionisches und / oder nicht-ionisches Emulgier- und / oder Dispergiermittel in einem Mischgefäß zusammengeführt. Diese Zusammenführung geschieht unmittelbar und die beiden Komponenten werden durch Rühren in einem Zeitraum bis 2 Stunden zur Reaktion gebracht. Anschließend wird eine Protease hinzugefügt und durch Rühren in einem Zeitraum bis 24 Stunden, bevorzugt bis 12 Stunden, besonders bevorzugt in einem Zeitraum bis 8 Stunden, zu einer Deproteinierungsreaktion gebracht. Dabei entstehen die Abbauprodukte der Deproteinierungsreaktion. Erfindungswesentlich ist, dass diese in dem Mischgefäß verbleiben. Danach werden die wässrige Klebharzdispersion, das Gefrierschutzmittel und die weiteren Zusatzstoffe hinzugegeben.

Der Vorteil der Erfindung ist darin zusehen, dass die Abbauprodukte einer Deproteinierungsreaktion in dem Dichtmittel verbleiben. Dies führt zu einer vereinfachten und somit kostengünstigeren Herstellung des Dichtmittels. In einem herkömmlichen Verfahren wird der Naturkautschuklatex vorher einer Deproteinierungsreaktion unterzogen und die entsprechenden Abbauprodukte und Deproteinierungsmittel werden aufwändig aus dem Naturkautschuklatex entfernt. Dies führt unter anderem auch dazu, dass die Deproteinierung nicht vollständig erfolgt, so dass der Naturkautschuklatex meist noch geringe Mengen an allergenen Proteinen enthält.

In der vorliegenden Erfindung findet das Deproteinerungsmittel, hier die Protease, genügend Zeit zur vollständigen Deproteinierung, dadurch, dass es in dem Dichtmittel verbleibt. Dadurch können auch Dispergier- und / oder Emulgiermittel ihre volle Wirkung entfalten, was sich positiv auf die Temperaturstabilität vor allem bei erhöhten Temperaturen auswirkt.

Das vorstehend beschriebene Dichtmittel wird zum Abdichten einer Beschädigungsstelle eines Gummiartikels, insbesondere eines Gummihohlartikels, eingesetzt, wobei der Gummihohlartikel vorzugsweise mit Luft, Stickstoff oder Helium gefüllt ist. Meist wird es aber zum Abdichten einer Beschädigungsstelle eines Fahrzeugreifens verwendet, wobei das Dichtmittel nach seinem Einbringen in den Fahrzeugreifen durch Drehen des Rades an der Reifeninnenwandung verteilt wird und das Dichtmittel in und/oder an die Beschädigungsstelle bzw. Einstichstelle dringt und diese schließt, so dass keine Luft mehr aus dem Reifen entweichen kann.

Es wurde das folgende Dichtmittel E hergestellt:
- 44 Gew.-% einer Naturkautschuklatex-Dispersion mit einem Feststoffgehalt von ca 60% (Low Ammonia NR-Latex, NEOTEX LAT2, Weber & Schaer)
- 1 Gew.-% ionisches Dispergiermittel (Natrium-Laurylsulfat)
- 1 Gew. -% Protease (Alcalase, Fa. Novozymes Deutschlan GmbH)
- 20 Gew. -% Klebharzdispersion (wässrige Kolophoniumester-Disperion mit einem Feststoffgehalt von 50%, Eastman Chemical Middelburg BV, The Netherlands)
- 33 Gew.-% Ethylenglykol

Mit diesem Dichtmittel E zeigt sich eine Verbesserung der Stabilität bei erhöhten Temperaturen, nachgewiesen durch eine thermische Langzeitalterung (45 Tage bei 70°C) und verbesserte Koagulatbildung.

Zur Bestimmung der thermischen Langzeitalterung wurden jeweils eine Flasche mit dem Dichtmittel E und eine Flasche mit einem Referenz-Dichtmittel R für 45 Tage bei 70°C in einen Ofen gestellt. Das Referenz-Dichtmittel R ist ein herkömmliches Dichtmittel auf der Basis einer nicht-deproteinierten Naturkautschuklatex-Dispersion und ohne Zugabe einer oder mehrerer Proteasen.

Anschließend wurden die Koagulatbildung durch den quantitativen Siebrückstand mittels eines Siebes mit 150µm Porengröße und die Viskosität mit einem Brookfield® - Viskosimeter bestimmt.

Das Referenz-Dichtmittel R wurde auf 100 indiziert. Kleinere Werte für die Koagulatbildung und die Viskosität stellen eine Verbesserung dar. Anhand der Tabelle 1 zeigt sich eine deutliche Verbesserung dieser beiden Eigenschaften des Dichtmittels E im Vergleich zum Referenz-Dichtmittel R.

| **Dichtmittel** | **Koagulatbildung** | **Viskosität** |
|---|---|---|
| **R** | 100 | 100 |
| **E** | 16 | 33 |

Bei der Verwendung zum Abdichten von Beschädigungsstellen im Fahrzeugreifen zeigen im nicht-gealterten Zustand beide Dichtmittel gleich gute Eigenschaften.

## Patentansprüche

1. Verfahren zur Herstellung eines Dichtmittels, **dadurch gekennzeichnet, dass** die einzelnen Komponenten in einer zeitlich definierten Reihenfolge in einem Mischgefäß zusammengeführt werden, wobei zuerst eine 30 - 90 Gew. -% Naturkautschuklatex-Dispersion und 0,1 - 10 Gew. -% zumindest eines ionischen und / oder nicht-ionischen Emulgier- und / oder Dispergiermittel in einem Mischgefäß zusammengeführt werden und anschließend 0,0001 - 10 Gew. -% einer Protease hinzugefügt wird, wobei 0,01 - 12 Gew. -% der Abbauprodukte einer Deproteinierungsreaktion entstehen und in dem Mischgefäß verbleiben, und diesem Inhalt des Mischgefäßes danach 5 - 40 Gew. -% einer wässrigen Klebharzdispersion, 1 - 50 Gew. -% eines Gefrierschutzmittels und 0 - 30 Gew. - % weiterer Zusatzstoffe hinzugefügt wird.

2. Verfahren nach Anspruch 1, **dadurch gekennzeichnet, dass** das ionische Emulgier- und / oder Dispergiermittel ein ionisches Tensid ist.

3. Verfahren nach Anspruch 1, **dadurch gekennzeichnet, dass** das ionische Emulgier- und / oder Dispergiermittel ein anionisches Tensid ist.

4. Verfahren nach Anspruch 3, **dadurch gekennzeichnet, dass** das anionische Tensid ein Carbonsäure-Tensid und / oder ein Sulfonsäure-Tensid und / oder ein Sulfat-Tensid und / oder ein Phosphat-Tensid ist.

5. Verfahren nach einem der Ansprüche 1 bis 4, **dadurch gekennzeichnet, dass** das nicht-ionische Emulgier- und / oder Dispergiermittel ein nicht-ionisches Tensid ist.

6. Verfahren nach Anspruch 5, **dadurch gekennzeichnet, dass** das nicht-ionische Tensid ein Polyoxyalkylenether-Tensid und / oder ein mehrwertiges Alkohol-Fettsäureester-Tensid und / oder ein Zuckerfettsäureester-Tensid und / oder ein Alkylolyglycosid-Tensid und / oder ein Polyoxyalkyl-mehrwertiger Alkohol-Ether-Tensid ist.

7. Verfahren nach einem der Ansprüche 1 bis 6, **dadurch gekennzeichnet, dass** die Protease ausgewählt ist aus der Gruppe, bestehend aus Alkalase und / oder Esperase und / oder Savinase und / oder Liquanase.

8. Verfahren nach einem der Ansprüche 1 bis 7, **dadurch gekennzeichnet, dass** die wässrige Klebharzdispersion auf der Basis von Kolophoniumharzester und / oder Terpen-Phenol-Harz und / oder Alkin-Phenol-Harz und / oder Cumaron-Inden-Harz ist.

9. Verfahren nach einem der Ansprüche 1 bis 8, **dadurch gekennzeichnet, dass** das Gefrierschutzmittel ausgewählt ist aus der Gruppe, bestehend aus Ethylenglykol und / oder Di-Ethylenglykol und / oder Tri-Ethylenglykol und / oder Di-Ethylenglykol-Monomethylether und / oder Propylenglykol und / oder Propylenglykol-Monomethylether und / oder Di-Propylenglykol-Monomethylether, Di-Propylenglykol und / oder Propylenglykol-Monopropylether und / oder Ethanol und / oder Isopropanol.

10. Verwendung eines Dichtmittels hergestellt nach einem der Ansprüche 1 bis 9 zum Abdichten einer Beschädigungsstelle eines Gummiartikels.

11. Verwendung eines Dichtmittels hergestellt nach einem der Ansprüche 1 bis 9 zum Abdichten einer Beschädigungsstelle eines Gummihohlartikels.

12. Verwendung eines Dichtmittels hergestellt nach einem der Ansprüche 1 bis 9 zum Abdichten einer Beschädigungsstelle eines mit Gas, bevorzugt mit Luft, Stickstoff oder Helium, gefüllten Gummihohlartikels.

13. Verwendung eines Dichtmittels hergestellt nach einem der Ansprüche 1 bis 9 zum Abdichten einer Beschädigungsstelle eines Fahrzeugreifens.

14. Verwendung eines Dichtmittels hergestellt nach einem der Ansprüche 1 bis 9 zum Abdichten einer Beschädigungsstelle eines Fahrzeugreifens, wobei das Dichtmittel nach seinem Einbringen in den Fahrzeugreifen durch Drehen des Rades an der Reifeninnenwandung verteilt wird und das Dichtmittel in und/oder an die Beschädigungsstelle bzw. Einstichstelle dringt und diese schließt, so dass keine Luft mehr aus dem Reifen entweichen kann.

## Claims

1. Process for producing a sealant, **characterized in that** the individual components are combined in a mixing vessel in a defined time sequence, wherein initially a 30-90% by weight natural rubber latex dispersion and 0.1-10% by weight of at least one ionic and/or nonionic emulsifier and/or dispersant are combined in a mixing vessel and subsequently 0.0001-10% by weight of a protease is added, wherein 0.01-12% by weight of decomposition products of a deproteination reaction are formed and remain in the mixing vessel, and the contents of the mixing vessel are subsequently added to 5-40% by weight of an aqueous adhesive resin dispersion, 1-50% by weight of an antifreeze and 0-30% by weight of further additives.

2. Process according to Claim 1, **characterized in that** the ionic emulsifier and/or dispersant is an ionic surfactant.

3. Process according to Claim 1, **characterized in that** the ionic emulsifier and/or dispersant is an anionic surfactant.

4. Process according to Claim 3, **characterized in that** the anionic surfactant is a carboxylic acid surfactant and/or a sulfonic acid surfactant and/or a sulfate surfactant and/or a phosphate surfactant.

5. Process according to any of Claims 1 to 4, **characterized in that** the nonionic emulsifier and/or dispersant is a nonionic surfactant.

6. Process according to Claim 5, **characterized in that** the nonionic surfactant is a polyoxyalkylene ether surfactant and/or a polyhydric alcohol fatty acid ester surfactant and/or a sugar fatty acid ester surfactant and/or an alkyl polyglycoside surfactant and/or a polyoxyalkyl polyhydric alcohol ether surfactant.

7. Process according to any of Claims 1 to 6, **characterized in that** the protease is selected from the group consisting of alkalase and/or esperase and/or savinase and/or liquanase.

8. Process according to any of Claims 1 to 7, **characterized in that** the aqueous adhesive resin dispersion is based on colophony resin ester and/or terpene-phenol resin and/or alkyne-phenol resin and/or coumarone-indene resin.

9. Process according to any of Claims 1 to 8, **characterized in that** the antifreeze is selected from the group consisting of ethylene glycol and/or diethylene glycol and/or triethylene glycol and/or diethylene glycol monomethyl ether and/or propylene glycol and/or propylene glycol monomethyl ether and/or dipropylene glycol monomethyl ether, dipropylene glycol and/or propylene glycol monopropyl ether and/or ethanol and/or isopropanol.

10. Use of a sealant produced according to any of Claims 1 to 9 for sealing a site of damage to a rubber article.

11. Use of a sealant produced according to any of Claims 1 to 9 for sealing a site of damage to a hollow rubber article.

12. Use of a sealant produced according to any of Claims 1 to 9 for sealing a site of damage to a hollow rubber article filled with gas, preferably with air, nitrogen or helium.

13. Use of a sealant produced according to any of Claims 1 to 9 for sealing a site of damage to a vehicle tyre.

14. Use of a sealant produced according to any of Claims 1 to 9 for sealing an area of damage to a vehicle tyre, wherein after introduction into the vehicle tyre the sealant is distributed over the tyre inner wall by rotating the wheel and the sealant penetrates into and/or onto the site of damage/puncture site and seals said site so that air can no longer escape from the tyre.

## Revendications

1. Procédé de fabrication d'un agent d'étanchéité, **caractérisé en ce que** les composants individuels sont rassemblés dans un ordre défini dans le temps dans un récipient de mélange, une dispersion de latex de caoutchouc naturel à 30 à 90 % en poids et 0,1 à 10 % en poids d'au moins un émulsifiant et/ou dispersant ionique et/ou non ionique étant tout d'abord rassemblés dans un récipient de mélange, puis 0,0001 à 10 % en poids d'une protéase étant ajouté, 0,01 à 12 % en poids des produits de décomposition d'une réaction de déprotéination se formant et restant dans le récipient de mélange, puis 5 à 40 % en poids d'une dispersion aqueuse de résine adhésive, 1 à 50 % en poids d'un agent antigel et 0 à 30 % en poids d'additifs supplémentaires étant ajoutés à ce contenu du récipient de mélange.

2. Procédé selon la revendication 1, **caractérisé en ce que** l'émulsifiant et/ou le dispersant ionique est un tensioactif ionique.

3. Procédé selon la revendication 1, **caractérisé en ce que** l'émulsifiant et/ou le dispersant ionique est un tensioactif anionique.

4. Procédé selon la revendication 3, **caractérisé en ce que** le tensioactif anionique est un tensioactif acide carboxylique et/ou un tensioactif acide sulfonique et/ou un tensioactif sulfate et/ou un tensioactif phosphate.

5. Procédé selon l'une quelconque des revendications 1 à 4, **caractérisé en ce que** l'émulsifiant et/ou le dispersant non ionique est un tensioactif non ionique.

6. Procédé selon la revendication 5, **caractérisé en ce que** le tensioactif non ionique est un tensioactif éther de polyoxyalkylène et/ou un tensioactif ester d'acide gras d'alcool polyvalent et/ou un tensioactif ester d'acide gras de sucre et/ou un tensioactif polyglycoside d'alkyle et/ou un tensioactif éther polyoxyalkylique d'alcool polyvalent.

7. Procédé selon l'une quelconque des revendications 1 à 6, **caractérisé en ce que** la protéase est choisie dans le groupe constitué par les alcalases et/ou les espérases et/ou les savinases et/ou les liquanases.

8. Procédé selon l'une quelconque des revendications 1 à 7, **caractérisé en ce que** la dispersion aqueuse de résine adhésive est à base d'un ester de résine de colophane et/ou d'une résine de terpène-phénol et/ou d'une résine d'alcyne-phénol et/ou d'une résine de coumarone-indène.

9. Procédé selon l'une quelconque des revendications 1 à 8, **caractérisé en ce que** l'agent antigel est choisi dans le groupe constitué par l'éthylène glycol et/ou le diéthylène glycol et/ou le triéthylène glycol et/ou l'éther monométhylique de diéthylène glycol et/ou le propylène glycol et/ou l'éther monométhylique de propylène glycol et/ou l'éther monométhylique de dipropylène glycol, le dipropylène glycol et/ou l'éther monopropylique de propylène glycol et/ou l'éthanol et/ou l'isopropanol.

10. Utilisation d'un agent d'étanchéité fabriqué selon l'une quelconque des revendications 1 à 9 pour l'étanchéification d'un site d'endommagement d'un article en caoutchouc.

11. Utilisation d'un agent d'étanchéité fabriqué selon l'une quelconque des revendications 1 à 9 pour l'étanchéification d'un site d'endommagement d'un article creux en caoutchouc.

12. Utilisation d'un agent d'étanchéité fabriqué selon l'une quelconque des revendications 1 à 9 pour l'étanchéification d'un site d'endommagement d'un article creux en caoutchouc rempli avec un gaz, de préférence avec de l'air, de l'azote ou de l'hélium.

13. Utilisation d'un agent d'étanchéité fabriqué selon l'une quelconque des revendications 1 à 9 pour l'étanchéification d'un site d'endommagement d'un pneu de véhicule.

14. Utilisation d'un agent d'étanchéité fabriqué selon l'une quelconque des revendications 1 à 9 pour l'étanchéification d'un site d'endommagement d'un pneu de véhicule, l'agent d'étanchéité étant réparti sur la paroi intérieure du pneu par rotation de la roue après son application dans le pneu de véhicule, et l'agent d'étanchéité pénétrant dans et/ou sur le site d'endommagement ou le site de ponction, et fermant celui-ci, de telle sorte que l'air ne puisse plus s'échapper du pneu.
